# EUROPÄISCHE PATENTANMELDUNG

(11) **EP 4 009 739 A1**
(43) Veröffentlichungstag der Anmeldung: **08.06.2022**
(21) Anmeldenummer: 21209798.4
(22) Anmeldetag: 23.11.2021
(51) Int. Cl.: H05B 1/02, H05B 6/06

(54) **VERFAHREN ZUM BETRIEB EINES KOCHFELDS, KOCHFELD UND KOCHFELDSYSTEM**

(30) Priorität: 03.12.2020 DE 102020215319
(71) Anmelder: E.G.O. Elektro-Gerätebau GmbH, 75038 Oberderdingen (DE)
(72) Erfinder: FRANK, Marcus, 75056 Sulzfeld (DE)
(74) Vertreter: Patentanwälte Ruff, Wilhelm, Beier, Dauster & Partner mbB

(57) **Zusammenfassung**

Für eine bessere Temperaturerfassung und Temperaturregelung eines Gargeräts auf einem Kochfeld mittels einer Induktionsspule weist das Gargerät eine spezifische individuelle Identifikation auf. Diese kann in einem NFC-Tag als Identifikationsmittel enthalten sein. Sie kann an einem Kochfeld ausgelesen werden, entweder über das Kochfeld selbst oder über ein Mobiltelefon, und in eine Datenbank in einer Cloud im Internet übertragen werden. Von dort können spezifische Charakteristika für dieses Gargerät heruntergeladen werden und für eine Temperaturregelung des Beheizens des Gargeräts verwendet werden.

## Beschreibung

### Anwendungsgebiet und Stand der Technik

Die Erfindung betrifft ein Verfahren zum Betrieb eines Kochfelds zum Beheizen eines Gargeräts, insbesondere zur Zubereitung eines Lebensmittels darin, ein Kochfeld zur Durchführung dieses Verfahrens sowie ein Kochfeldsystem, das aus einem solchen Kochfeld und aus mindestens einem Gargerät besteht.

Aus der DE 102016222313 A1 ist es bekannt, zum Beheizen eines Gargeräts mit Gargut darin, nämlich eines Topfes mit zu kochenden Eiern darin, ein sogenanntes Automatikprogramm zu verwenden. Um dieses Automatikprogramm durchführen zu können bzw. als Regelgröße wird eine Temperatur des Gargerätbodens verwendet. Diese kann berührungslos von unten durch eine Kochfeldplatte hindurch erfasst werden, indem die Betriebsdaten aus der Ansteuerung einer Induktionsheizspule zum Beheizen des Gargeräts ausgewertet werden. Dies ist in diesem speziellen Fall gut möglich, da Eier im kochenden Wasser zubereitet werden, und die Temperatur eines Gargerätbodens bei kochendem Wasser relativ leicht auf genannte Art und Weise festgestellt werden kann. Der Gargerätboden kann sich bekanntermaßen nicht nennenswert über 100°C hinaus erwärmen, zumindest solange Wasser im Gargerät ist.

### Aufgabe und Lösung

Der Erfindung liegt die Aufgabe zugrunde, ein eingangs genanntes Verfahren zum Betrieb eines Kochfelds, ein solches Kochfeld sowie ein Kochfeldsystem bestehend aus einem solchen Kochfeld und einem Gargerät zu schaffen, mit denen Probleme des Standes der Technik gelöst werden können und es insbesondere möglich ist, das Gargerät zielgerichtet und genau beheizen zu können, vorzugsweise individuell auf das Gargerät abgestimmt.

Gelöst wird diese Aufgabe durch ein Verfahren mit den Merkmalen des Anspruchs 1, ein Kochfeld mit den Merkmalen des Anspruchs 14 sowie durch ein Kochfeldsystem mit den Merkmalen des Anspruchs 15. Vorteilhafte sowie bevorzugte Ausgestaltungen der Erfindung sind Gegenstand der weiteren Ansprüche und werden im Folgenden näher erläutert. Dabei werden manche der Merkmale nur für das Verfahren, nur für das Kochfeld oder nur für das Kochfeldsystem erläutert. Sie sollen jedoch unabhängig davon sowohl für ein Verfahren als auch für ein Kochfeld und ein entsprechendes Kochfeldsystem selbständig und unabhängig voneinander gelten können. Der Wortlaut der Ansprüche wird durch ausdrückliche Bezugnahme zum Inhalt der Beschreibung gemacht.

Das Kochfeld weist eine Kochfeldplatte und mindestens eine Heizeinrichtung unter der Kochfeldplatte auf, vorteilhaft mehrere Heizeinrichtungen. Diese dienen dazu, ein auf die Kochfeldplatte darüber aufgestelltes Gargerät zu beheizen. Vorteilhaft sind die Heizeinrichtungen als Induktionsheizspulen ausgebildet, es können aber auch andere Beheizungsarten verwendet werden, beispielsweise Strahlungsheizeinrichtungen. Das Kochfeld weist des Weiteren eine Kochfeldsteuerung, eine Leistungsversorgung für die mindestens eine Heizeinrichtung sowie eine Kommunikationseinrichtung auf, die zur Kommunikation mit einer Gegen-Kommunikationseinrichtung ausgebildet ist, die außerhalb des Kochfelds angeordnet ist. Somit kann die Kochfeldsteuerung sozusagen nach außen kommunizieren. Diese Kommunikation kann einerseits drahtlos erfolgen, was technisch einfach möglich ist und einen geringen Installationsaufwand bedeutet. Andererseits kann die Kommunikation der Kochfeldsteuerung bzw. des Kochfelds nach außen auch mittels eines LAN-Kabels erfolgen, also drahtgebunden. Das Gargerät weist einen Gargerätboden sowie berührungslos lesbare bzw. auslesbare Identifikationsmittel auf, die eine Identifikation des Gargeräts oder zu dem Gargerät enthalten, also eine Information oder Kennung zu genau diesem Gargerät. Diese Identifikation ist also eine Information, die in dem Identifikationsmittel sozusagen gespeichert ist. Das Identifikationsmittel kann berührungslos ausgelesen oder abgefragt werden, damit also die Information oder Kennung bzw. Identifikation bekannt wird, beispielsweise optisch bzw. durch Abscannen ausgelesen werden, alternativ per Funk.

Das Gargerät kann vorzugsweise eine Art Topf oder Pfanne sein, es kann auch eine äußere Umhüllung bzw. Verkleidung aufweisen, durch welche es einem tatsächlich funktionalen Gerät wie beispielsweise einer Friteuse oder einem Eierkocher ähnlich sieht. Die Information oder Kennung bzw. Identifikation des Gargeräts ist entweder völlig individuell auf dieses eine spezielle Gargerät abgestimmt, so dass nicht jedes einzelne Gargerät, das identisch zueinander ist, dieselbe Identifikation aufweist. Alternativ kann sie eine Typenklasse eines Gargeräts kennzeichnen, so dass identisch ausgebildete Gargeräte dieselbe Information oder Kennung bzw. Identifikation aufweisen.

Bei dem Verfahren werden die folgenden Schritte durchgeführt. Die Identifikation des Gargeräts wird über die Identifikationsmittel ausgelesen, abhängig von deren Ausgestaltung. Beispielsweise kann dies auf vorgenannte Art und Weise optisch oder per Funk erfolgen. Dies kann zwar in einer Ausgestaltung der Erfindung vom Kochfeld selbst durchgeführt werden, in einer anderen Ausgestaltung der Erfindung wird dies aber durch ein externes Gerät gemacht, vorteilhaft durch ein mobiles Endgerät wie ein Smartphone oder einen Tablet-Computer. Diese ausgelesene Identifikation wird dann vorteilhaft dorthin gegeben, wo das Auslesen erfolgt, also entweder wird sie an die Kochfeldsteuerung gegeben oder an ein genanntes externes Gerät bzw. mobiles Endgerät. Anschließend verbindet sich die Kochfeldsteuerung mittels ihrer Kommunikationseinrichtung mit einer Gegen-Kommunikationseinrichtung, die außerhalb des Kochfelds angeordnet ist, und zwar drahtlos per Funk oder per Netzwerkkabel, vorteilhaft in einem Gerät angeordnet ist. Diese Gegen-Kommunikationseinrichtung wiederum ist mit einer Informationssammlung verbunden, was vorteilhaft als Verbindung über das Internet mit einer Datenbank oder mit einer Cloud ausgebildet sein kann. Diese Gegen-Kommunikationseinrichtung könnte beispielsweise als ein WLAN-Access Point ausgebildet sein, der in einem Haus oder in einem Raum vorgesehen ist, und mit dem sich das Kochfeld bzw. seine Kommunikationseinrichtung verbinden kann, alternativ ein LAN-Netzwerk. So kann das Kochfeld mit der genannten Datenbank oder Cloud verbunden werden. Alternativ kann ein vorgenanntes externes Gerät bzw. ein mobiles Endgerät wie beispielsweise ein Smartphone oder ein Tablet-Computer vorgesehen sein, wobei sich dann dieses mobile Endgerät mit dem Internet mit Datenbank bzw. mit einer Cloud verbindet. In diesem Fall ist eine drahtlose Verbindung zu dem externen Gerät bzw. dem mobilen Endgerät zu bevorzugen.

In der Informationssammlung sind dann Charakteristika oder Parameter bzgl. physikalischer Eigenschaften des erkannten bzw. identifizierten Gargeräts abgespeichert. Die Information dieser Charakteristika kann relativ umfangreich sein, weswegen sie in einigen Fällen nicht direkt in dem Identifikationsmittel selbst enthalten ist. Diese genannten Charakteristika enthalten mindestens eine Information aus der folgenden Gruppe von Regelcharakteristika, Steuercharakteristika, Bediencharakteristika oder Anzeigecharakteristika. Gerade anhand der Regelcharakteristika bzw. Steuercharakteristika des Gargeräts kann eine genauere und möglicherweise komfortablere Temperaturregelung des Gargeräts erfolgen, da sie Parameter enthalten können, die ein bestimmtes Verhalten des Gargeräts besser auswertbar machen. Die anderen Charakteristika können eine komfortablere Bedienung bewirken. Diese Parameter können beispielsweise bei induktiver Temperaturmessung Charakteristika bzgl. des Gerätebodenmaterials und des Verhaltens seiner Permeabilität als Funktion der Temperatur sein. Außerdem könnten es bei optischen Temperaturmessverfahren Charakteristika bzgl. des Strahlungsemissionsverhaltens als Funktion der Temperatur sein.

Die Charakteristika bzw. Information bezüglich des Gargeräts werden in die Kochfeldsteuerung geladen und insbesondere in einem Speicher der Kochfeldsteuerung abgespeichert. Dies kann unter Umständen so aussehen, dass dies jedes Mal verwendet wird, wenn dieses Gargerät mit diesem Kochfeld benutzt wird. Alternativ kann diese Information bezüglich des Gargeräts schon ab Werk oder nach einem erstmaligen aber einmaligen Download in der Kochfeldsteuerung oder einem Speicher davon abgespeichert sein, sie wird dann eben in den Vordergrund geholt bzw. geladen für das Beheizen des Gargeräts am Kochfeld.

Dann ist entweder das Gargerät bereits auf die Kochfeldplatte über mindestens eine Heizeinrichtung aufgestellt oder es wird erst aufgestellt. Beide Optionen sind möglich, wichtig ist eben, dass die Informationen von der Kochfeldsteuerung genutzt werden können. Als nächstes berechnet oder erhält die Kochfeldsteuerung die Angabe oder Information, über welcher Heizeinrichtung oder über welchen Heizeinrichtungen das Gargerät aufgestellt ist. Dazu kann eine an sich gut bekannte Topferkennungseinrichtung eingesetzt werden. Dann betreibt sie diese Heizeinrichtung oder diese Heizeinrichtungen zum Beheizen des Gargeräts, wobei die heruntergeladenen und ggf. abgespeicherten Informationen bzw. Charakteristika bezüglich dieses individuellen Gargeräts genutzt bzw. verwendet werden. Sind zum Beispiel Kenndaten des Gargerätbodens genau bekannt, beispielsweise hinsichtlich Größe und/oder Material und/oder Verhalten in bestimmten Fällen, so kann mittels einer Induktionsheizspule dessen Temperatur sehr genau ermittelt werden. Hierzu wird beispielsweise verwiesen auf die DE 102009047185 A1 oder die EP 3177107 A1, dort ist dies erläutert. Ein Temperaturkennwert bzw. eine Temperatur des Gargeräts bzw. des Gargerätbodens wird vom Kochfeld erfasst anhand der gargerätspezifischen Informationen. Eine Temperatur des Gargerätbodens wird über eine induktive Kopplung mit einer Eigenresonanzmessung des Gargerätbodens bzw. eines Schwingkreises gemessen, der den Gargerätboden und eine Induktionsspule umfasst. Diese Induktionsspule kann vorteilhaft die vorgenannte Induktionsheizspule sein, dies ist aber nicht zwingend.

Dann erfolgt eine temperaturgeregelte Beheizung, möglicherweise auf eine bestimmte Temperatur vorgegeben oder auf einen bestimmten Temperaturverlauf vorgegeben, wobei diese Beheizung mittels der Heizeinrichtung erfolgt. Dabei werden eben die gargerätspezifischen Informationen benutzt, sei es, dass sie extra aus dem Internet heruntergeladen worden sind, sei es, dass sie fallspezifisch aus einem Speicher der Kochfeldsteuerung aufgerufen worden sind.

Somit ist eine genaue Beheizung des Gargeräts möglich, indem eben die Kochfeldsteuerung genau weiß, welches spezielle Gargerät zum Beheizen vorliegt. Die erfasste Temperatur des Gargeräts bzw. des Gargerätbodens entspricht dessen Wärme, was als physikalische Eigenschaft erkannt werden kann. Der daraus gewonnene Temperaturkennwert ist dann die Information, die sich daraus ergibt. Sie liegt dann nicht in °C vor, sondern beispielsweise als Impedanz, Stromstärke, Phasenverschiebung, Frequenz odgl..

In Ausgestaltung der Erfindung kann vorgesehen sein, dass das Kochfeld eine Kochfeldanzeige aufweist. An dieser Kochfeldanzeige wird eine Leistung der Heizeinrichtung, vorteilhaft in Leistungsstufen eingeteilt, wie dies an sich aus dem Stand der Technik bekannt ist, und/oder eine Temperatur des Gargeräts bzw. des Gargerätbodens angezeigt. Hier sollte dann, damit die Bedienperson diese Information verstehen kann, tatsächlich eine Temperatur in °C angezeigt werden. Für manche Vorgänge, beispielsweise ein Braten von Steak in einer Pfanne als Gargerät oder das Frittieren von Pommes Frites in einem Topf entsprechend einer Friteuse als Gargerät, kann dies von Bedeutung sein für die Bedienperson. Dies kann zusätzlich oder alternativ zur Verwendung der Temperatur in einem vorgenannten Automatikkochprogramm erfolgen.

An einer vorgenannten Kochfeldanzeige können auch allgemeine Informationen zum Gargerät angezeigt werden, insbesondere die Art des Gargeräts und/oder eine Bezeichnung des Gargeräts. Dies kann für eine Bedienperson möglicherweise während des Kochvorgangs von Interesse sein.

In weiterer Ausbildung der Erfindung kann das Kochfeld eine Bedieneinrichtung aufweisen, die vielfältige Bedienmöglichkeiten bieten kann. Vorteilhaft erfolgt dies mit Berührschaltern oder einem berührempfindlichen bzw. Touch-Display. Es ist möglich, dass die Bedieneinrichtung in ihrem Erscheinungsbild und/oder hinsichtlich ihrer Bedienmöglichkeiten an die Art des Gargeräts oder an das spezielle individuelle einzelne Gargerät angepasst wird. Dies erfolgt vorteilhaft anhand der Informationen zum Gargerät, die auf vorgenannte Art und Weise an die Kochfeldsteuerung gegeben werden. So kann sich das Kochfeld intelligent an die gegebenen Möglichkeiten aufgrund des Gargeräts anpassen.

In weiterer Ausgestaltung der Erfindung ist es möglich, dass zum Beheizen des Gargeräts verschiedene Zieltemperaturen vorgegeben werden können. Insbesondere kann eine Bedienperson die Zieltemperatur an einer vorgenannten Bedieneinrichtung eingeben. Derartige Zieltemperaturen können an einer vorgenannten Kochfeldanzeige angezeigt werden, so dass die Bedienperson diese Information präsent hat. Die Zieltemperatur kann also von der Bedienperson eingegeben werden, alternativ kann sie auch von einem Automatikkochprogramm bestimmt werden. Dann kann es für die Bedienperson von Interesse sein, diese Information zu sehen. Die Kochfeldsteuerung kann eine Temperaturregelung für das Gargerät bzw. dessen Gargerätboden auf genau diese Temperatur bzw. Zieltemperatur vornehmen durch entsprechende Ansteuerung der mindestens einen Heizeinrichtung, die von dem Gargerät überdeckt ist.

In Ausgestaltung der Erfindung können neben den vorgenannten Zieltemperaturen auch noch weitere verschiedene Einstellparameter, beispielsweise bezüglich eines Gargrads, einer Ausgangskonsistenz, einer Eingangskonsistenz, einer Ausgangstemperatur und einer Eingangstemperatur, der Art odgl., die das Gargut betreffen, in das Kochfeld bzw. in die Kochfeldsteuerung eingegeben werden. Dies erfolgt vorteilhaft an der vorgenannten Bedieneinrichtung, insbesondere zusammenmit einer vorgenannten Kochfeldanzeige. Des Weiteren können diese Parameter oder Werte bzw. Informationen an der Kochfeldanzeige angezeigt werden. Dabei ist es möglich, dass die Kochfeldsteuerung eine Temperaturregelung des Gargeräts bzw. des Gargerätbodens auf diese gewünschte Ausgangstemperatur vornimmt, und zwar mittels der mindestens einen Heizeinrichtung.

Als Alternative zur Anordnung der Bedieneinrichtung und/oder der Kochfeldanzeige am Kochfeld selbst, also als dessen integraler Bestandteil, kann dies auch auf einem externen Bediengerät erfolgen, das bevorzugt zur Bedienung des Kochfelds vorgesehen ist. Vorteilhaft ist dies ein mobiles Endgerät wie ein Smartphone, ein Tablet-Computer odgl.. Dieses kann also zumindest einen Teil der Anzeigemöglichkeiten und/oder Bedienmöglichkeiten für das Kochfeld übernehmen. Es müssen dabei nicht alle Bedienmöglichkeiten an dem externen mobilen Bediengerät vorgesehen sein, es reicht, wenn dies einige sind. So kann durch ein solches externes mobiles Bediengerät eine Erweiterung der Möglichkeiten für das Kochfeld erfolgen, was vielfältige neue Möglichkeiten eröffnet für das Benutzen eines Kochfelds.

Die Induktionsspule für die Temperaturerfassung bzw. Temperaturmessung mit der induktiven Kopplung, also in dem vorgenannten Schwingkreis, ist vorteilhaft eben eine Induktionsheizspule des Kochfelds, mit der das Gargerät am Kochfeld beheizt werden kann, wie es auch der eingangs genannte Stand der Technik beschreibt. Auf diesen wird hier explizit verwiesen. Die vorgenannten Informationen aus der Informationssammlung zu diesem Gargerät, die in der Kochfeldsteuerung geladen bzw. gespeichert sind, können nun zur Anpassung der Beheizung des Gargeräts genutzt werden, insbesondere zur Anpassung einer Regelung von dessen Beheizung bzw. Temperatureinstellung.

In vorteilhafter Ausgestaltung der Erfindung weist das Kochfeld eine Topferkennungseinrichtung auf. Damit kann es erkennen, ob und wo ein Gargerät auf die Kochfeldplatte aufgestellt ist. Hierfür können an sich bekannte induktive Topferkennungssensoren verwendet werden, beispielsweise in Form von induktiven Sensoren bzw. kleinen Induktionsspulen. Diese können möglicherweise zusätzlich zu den vorgenannten Induktionsheizspulen vorgesehen sein. Aus dem Stand der Technik ist bekannt, wie mit beiden jeweils die Funktion des Erkennens des Gargeräts erreicht werden kann.

In einer ersten grundsätzlichen Ausgestaltung der Erfindung ist es möglich, dass die Identifikationsmittel des Gargeräts von einer Identifikationseinrichtung im Kochfeld selbst ausgelesen werden. Somit ist diese Identifikationseinrichtung im Kochfeld selbst vorhanden und dessen integraler Bestandteil. Hier bietet es sich beispielsweise an, dass die Identifikationsmittel ein RFID-Tag oder ein NFC-Tag am Gargerät sind, die die gargerätspezifische Information enthalten.

Eine gargerätspezifische Information kann dann beispielsweise ein mehrstelliger Zahlencode oder ein alphanumerischer Code sein, mit dem aus der eingangs genannten Informationssammlung die Charakteristika des Gargeräts verknüpft sind. Dann weist das Kochfeld wichtige Bestandteile auf, um das Ziel selbst erreichen zu können, diese Charakteristika des Gargeräts zu erfahren.

Für die konkrete Ausgestaltung kann vorgesehen sein, dass am Kochfeld ein bestimmter Identifikationsbereich vorgesehen ist. Wird das Gargerät mit seinen Identifikationsmitteln in diesem Identifikationsbereich platziert, so kann dort die Identifikationseinrichtung des Kochfelds die Identifikationsmittel erkennen und die Information daraus auslesen. Je nach Ausgestaltung der Identifikationsmittel und der Identifikationseinrichtung kann dies über eine Entfernung von wenigen oder einigen Zentimetern erfolgen, insbesondere zwischen 1cm und 20cm oder nur 10cm. Die Platzierung des Gargeräts muss also nicht absolut exakt sein. Alternativ können die Identifikationsmittel auch ein vorgenannter QR-Code oder Barcode sein, der durch eine Kamera am Kochfeld, möglicherweise auch unter einer lichtdurchlässigen Kochfeldplatte, ausgelesen werden kann. Dies wird aber als schwieriger angesehen.

Die Verwendung eines vorgenannten Identifikationsbereichs weist den großen Vorteil auf, dass so sichergestellt werden kann, dass sich eigentlich nur ein einziges Gargerät darin befinden kann, wenn der Identifikationsbereich nicht zu groß ausgebildet ist. Dann sind mögliche Fehler beim Erkennen reduziert.

In weiterer Ausgestaltung kann ein solcher Identifikationsbereich auch genutzt werden, um ein externes mobiles Endgerät induktiv zu laden, wie dies ja bekannt ist seit wenigen Jahren. Vor allem kann damit auch ein vorgenanntes mobiles Endgerät geladen werden, welches benutzt werden kann zum Auslesen der Identifikation der Gargeräts aus den Identifikationsmitteln und/oder zur Verbinden mit der externen Informationssammlung.

In einer zweiten grundsätzlichen Ausgestaltung der Erfindung wird zwingend ein mobiles Endgerät dazu verwendet, die Identifikationsmittel des Gargeräts auszulesen. Hier bietet es sich vor allem an, dass die Identifikationsmittel optisch erkennbar sind und beispielsweise als aufgedruckter oder angebrachter QR- oder Barcode ausgebildet sind. Alternativ kann aber auch ein vorgenannter RFID- oder NFC-Tag am Gargerät so ausgelesen werden. Die so ausgelesene Identifikation kann dann vom mobilen Endgerät über die Kommunikationseinrichtung an das Kochfeld bzw. an die Kochfeldsteuerung übertragen werden, so dass sie dort zur Verfügung steht.

In einer Ausbildungsmöglichkeit der Erfindung kann die Kommunikationseinrichtung dazu ausgebildet sein, dass sie sich selbst bzw. direkt mit dem Internet bzw. mit einer Cloud verbindet, um von dort die Information entsprechend den Charakteristika des Gargeräts in das Kochfeld herunterzuladen. So kann die Kochfeldsteuerung den Speicher damit direkt füllen.

In einer alternativen Ausbildungsmöglichkeit der Erfindung kann das Kochfeld mit der Kommunikationseinrichtung zwar eine Kommunikationsverbindung nach außen aufbauen, allerdings mittels eines vorgenannten mobilen Endgeräts, so dass sich dieses mobile Endgerät mit dem Internet bzw. mit einer Cloud verbindet. Dann wird die Identifikation des Gargeräts an die Cloud gegeben bzw. damit wird in der Cloud nach dem jeweiligen Gargerät gesucht. Die diesbezüglichen Informationen bzw. Charakteristika werden aus der Cloud zuerst auf das mobile Endgerät heruntergeladen und dann von diesem über die Kommunikationseinrichtung in die Kochfeldsteuerung gegeben. Dabei wird vorteilhaft der Umstand genutzt, dass sehr viele Personen bzw. Haushalte mittlerweile derartige mobile Endgeräte besitzen und auch benutzen, somit darin geübt sind. Vor allem ist es dabei möglich, dass keine Hardware benötigt wird, um eine relativ aufwändige WLAN-Verbindung oder ähnliche Datenverbindung herzustellen. Auch eine notwendige sichere Internetverbindung kann besser über hierfür sehr häufig verwendete mobile Endgeräte erfolgen, wie sie zuvor beschrieben worden sind.

Es kann vorgesehen sein, dass zumindest ein Teil der Information über Eigenschaften des konkreten Gargeräts in dem Identifikationsmittel selbst enthalten ist. Dann ist dies nicht nur möglicherweise eine individuelle Kennung, die eine genaue Identifikation und Zuordnung des Gargeräts ermöglicht. Vielmehr kann es sein, dass bereits bestimmte Eigenschaften oder vorteilhafte Betriebsparameter darin enthalten sind. Es ist auch möglich, dass in der Kochfeldsteuerung selbst eine bereits eingespeicherte Informationssammlung enthalten ist. Anhand der Identifikation des Gargeräts können dann die dazu passenden Informationen zum Gargerät verwendet werden.

Die Gegen-Kommunikationseinrichtung kann in einem vorgenannten mobilen Endgerät vorgesehen sein oder dadurch gebildet sein. Diese sind nämlich häufig dazu ausgebildet, über WLAN mit einem WLAN-Funknetz oder einem Access Point in Verbindung zu stehen, um so mit dem Internet verbunden zu werden.

Des Weiteren kann vorgesehen sein, dass die Informationen über das Gargerät aus der externen Informationssammlung, also Regelcharakteristika, Steuercharakteristika, Bediencharakteristika, Anzeigecharakteristika odgl., für ein Gargerät nur ein einziges Mal aus der Informationssammlung heruntergeladen werden. Dann werden sie in der Kochfeldsteuerung gespeichert und können von dort für eine zukünftige Verwendung abgerufen werden. Dies wird wiederum dadurch festgestellt, dass die Bedienperson das Gargerät zur Identifikation auf das Kochfeld stellt wie vorbeschrieben oder an einer Bedieneinrichtung auswählt oder mit einem vorgenannten mobilen Endgerät identifiziert.

Ein Gargerät als Teil eines erfindungsgemäßen Kochfeldsystems kann beispielsweise ein Metalltopf sein, oder zumindest ein Topf mit metallischem Boden, wie er an sich bekannt ist. Er weist dann eben das Identifikationsmittel auf. Alternativ kann er auch zumindest teilweise mit Teilen verkleidet sein, die ihn tatsächlich etwas mehr wie eingangs genannte Geräte wie Fritteusen, Wasserkocher oder Eierkocher wirken lassen. Dadurch wird eine möglicherweise ansprechendere Optik erreicht.

Diese und weitere Merkmale gehen außer aus den Ansprüchen auch aus der Beschreibung und den Zeichnungen hervor, wobei die einzelnen Merkmale jeweils für sich allein oder zu mehreren in Form von Unterkombinationen bei einer Ausführungsform der Erfindung und auf anderen Gebieten verwirklicht sein und vorteilhafte sowie für sich schutzfähige Ausführungen darstellen können, für die hier Schutz beansprucht wird. Die Unterteilung der Anmeldung in einzelne Abschnitte sowie Zwischen-Überschriften beschränken die unter diesen gemachten Aussagen nicht in ihrer Allgemeingültigkeit.

### Kurzbeschreibung der Zeichnungen

Ausführungsbeispiele der Erfindung sind in den Zeichnungen schematisch dargestellt und werden im Folgenden näher erläutert. In den Zeichnungen zeigen:
- Fig. 1: eine Schrägdarstellung eines erfindungsgemäßen Kochfelds mit einem aufgesetzten Gargerät, wobei das Kochfeld direkt mit dem Internet bzw. einer Cloud verbunden ist,
- Fig. 2: eine Abwandlung des Kochfelds aus Fig. 1, das indirekt über ein Mobiltelefon mit dem Internet bzw. einer Cloud verbunden ist, und
- Fig. 3: eine nochmalige Abwandlung der Erfindung, bei der die Identifikation des Gargeräts vom Mobiltelefon ausgelesen wird und an das Internet bzw. eine Cloud übertragen wird.

### Detaillierte Beschreibung der Ausführungsbeispiele

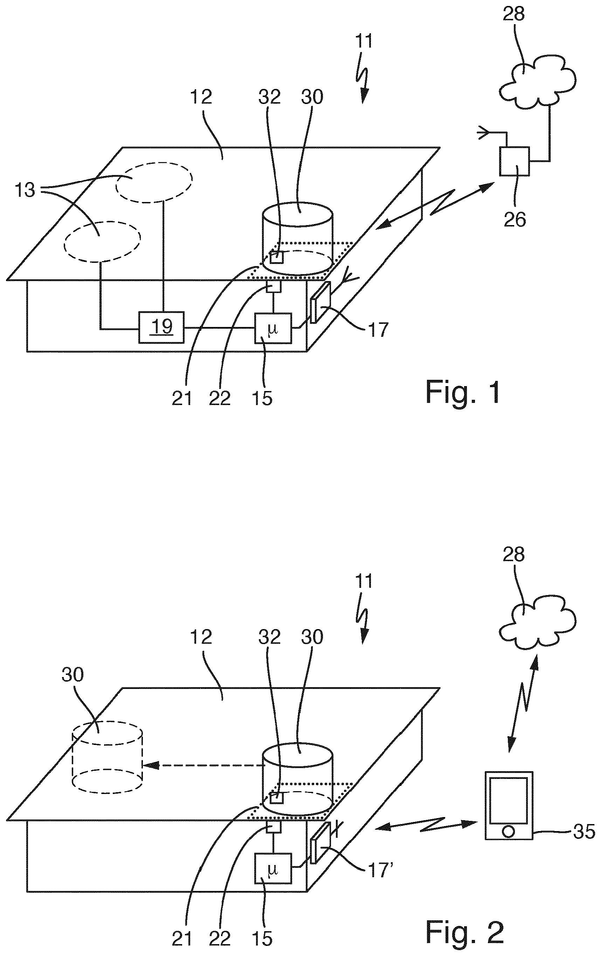

In der Fig. 1 ist in Schrägdarstellung ein erfindungsgemäßes Kochfeld 11 gezeigt mit einer Kochfeldplatte 12 und Heizeinrichtungen 13 darunter, die im linken Bereich gestrichelt angedeutet sind. Das Kochfeld 11 weist eine Kochfeldsteuerung 15 auf, vorteilhaft mit einem Mikrocontroller und einem Speicher dafür, welche eine Gegen-Kommunikationseinrichtung 17 zur drahtlosen Kommunikation aufweist. Vorteilhaft ist diese als WLAN-Modul ausgebildet bzw. sie ist WLAN-fähig, alternativ kann ein LAN-Kabelanschluss vorgesehen sein. Die Kochfeldsteuerung 15 kann noch mit einer Bedieneinrichtung und/oder einer Anzeigeeinrichtung des Kochfelds 11 verbunden sein, welche vorteilhaft vorgesehen sind, hier aber nicht dargestellt sind. Derartige Bedieneinrichtungen und Anzeigeeinrichtungen sind dem Fachmann aber ausreichend bekannt, so dass sie hier problemlos vorgesehen sein könnten.

Die Kochfeldsteuerung 15 ist mit einer Leistungsversorgung 19 des Kochfelds 11 verbunden. Über die Leistungsversorgung 19 kann sie die Heizeinrichtungen 13 jeweils ansteuern nach Bedienervorgaben oder entsprechend eingangs genannten Automatikkochprogrammen zum Durchführen von Garvorgängen. Schließlich ist die Kochfeldsteuerung 15 noch mit einem NFC-Leser 22 verbunden, der nahe einem gepunktet dargestellten Identifikationsbereich 21 angeordnet ist. Somit kann der NFC-Leser 22 einen NFC-Tag erkennen, der im Identifikationsbereich 21 angeordnet ist, um ihn auszulesen bzw. um die Information daraus zu gewinnen.

Rechts in Fig. 1 ist ein WLAN-Access Point 26 dargestellt, der in dem Haushalt installiert ist, in dem das Kochfeld 11 angeordnet ist. Die Kochfeldsteuerung 15 kann mittels der Gegen-Kommunikationseinrichtung 17 mit diesem WLAN-Access Point 26 kommunizieren und Daten bidirektional übertragen. Der WLAN-Access Point 26 ist über eine Internetverbindung mit einer Cloud 28 im Internet verbunden als Datenbank, in der die gewünschten Charakteristika verschiedener Gargeräte abgespeichert sind. Derartige Datenbanken können von den Herstellern von Gargeräten oder von anderen Dienstleistern, alternativ auch vom Hersteller des Kochfelds 11, betrieben werden.

Auf den Identifikationsbereich 21 ist ein Gargerät 30 mit Gargerätboden aufgestellt, welches einen NFC-Tag 32 aufweist. Das Gargerät 30 kann ein Wasserkocher sein, es könnte auch ein anderes vorgenanntes Kochgefäß sein, beispielsweise ein Eierkocher oder eine Fritteuse. Der NFC-Tag 32 ist im unteren Bereich angeordnet, so dass er möglichst nahe bei dem NFC-Leser 22 ist für ein problemloses Auslesen. Der NFC-Tag enthält eine Identifikation, beispielsweise eine Nummer bzw. Kennung, die vom NFC-Leser 22 ausgelesen wird und an die Kochfeldsteuerung 15 gegeben wird. Die Kochfeldsteuerung 15 schickt diese Identifikation oder Kennung dann über die WLAN-Verbindung 17 und 26 an die Cloud 28. Dort werden dann die entsprechenden Charakteristika für dieses spezielle Gargerät 30 abgefragt und zurück über die WLAN-Verbindung an die Kochfeldsteuerung 15 gegeben. Diese kann damit einen besseren Betrieb bzw. ein besseres Beheizen des Gargeräts 30 erreichen.

Dazu wird das Gargerät 30 nach dem Auslesen der Identifikation über eine der Heizeinrichtungen 13 aufgestellt zum Beheizen. Die Heizeinrichtungen 13 sind vorteilhaft Induktionsheizspulen und können so über das eingangs genannte Verfahren die Temperatur eines Bodens des Gargeräts 30 gut erfassen. Da sie die genauen Eigenschaften und Regelcharakteristika zu diesem Gargerät 30 bzw. seinem Gargerätboden nun kennen, kann eine Temperaturerfassung und somit eine temperaturgesteuerte Regelung erheblich besser erfolgen. Dabei kann die Temperatur bzw. ein vorgenannter Temperaturkennwert des Gargeräts 30 bzw. dessen Gargerätbodens erfasst und verwendet werden.

Der Identifikationsbereich 21 weist den eingangs genannten Vorteil auf, dass dann nur hier ein NFC-Leser 22 vorgesehen sein muss, nicht aber an sonstigen Bereichen. Somit kann das Kochfeld 11 sozusagen selbst die Identifikation des Gargeräts 30 auslesen und über seine eigene Gegen-Kommunikationseinrichtung 17 an die Cloud 28 übertragen, um von dort die gewünschten Charakteristika als Informationen zu erhalten. So können auch Gargeräte mit ihren speziellen Charakteristika verwendet werden, die nach Herstellen des Kochfelds 11 bzw. Programmieren der Kochfeldsteuerung 15 entwickelt worden sind und mit dem Kochfeld 11 entsprechend betrieben bzw. beheizt werden.

Der Identifikationsbereich 21 kann auch an anderer Stelle am Kochfeld 11 angeordnet sein. Vorteilhaft ist er derart weit von jeglicher Heizeinrichtung 13 entfernt, dass der NFC-Leser 22 nicht beschädigt wird. Er könnte jedoch auch direkt neben der Kochstelle sein, sodass das Gargefäß mit seinem Boden über der Heizeinrichtung steht, mit dem NFC-Tag 32 aber über dem NFC-Leser 22. Dies wäre beispielsweise möglich, wenn sich der NFC-Tag 32 in einem abstehenden Handgriff des Gargefäßes befände.

In der alternativen Ausgestaltung nach Fig. 2 weist das Kochfeld 11 ebenfalls den Identifikationsbereich 21 mit NFC-Leser 22 auf samt Kochfeldsteuerung 15 und Leistungsversorgung 19. Die Kochfeldsteuerung 15 ist auch mit einer Gegen-Kommunikationseinrichtung 17' verbunden, die hier als Bluetooth-Modul oder BLE-Modul ausgebildet ist. Sie kommuniziert also nicht direkt mit der WLAN-Verbindung oder einem WLAN-Access Point, sondern mit einem Mobiltelefon 35 per Bluetooth. Die vom Gargerät 30 ausgelesene Identifikation, die in dessen NFC-Tag 32 enthalten ist, wird also von der Kochfeldsteuerung 15 per Bluetooth an das Mobiltelefon 35 übergeben. Das Mobiltelefon 35 wiederum stellt eine mobile Datenverbindung zum Internet bzw. zu der Cloud 28 her, um die Identifikation zu übertragen. Wie zuvor erläutert, werden dann die gewünschten und benötigten Charakteristika zum Gargerät 30 an das Mobiltelefon 35 übertragen, welches sie wiederum per Bluetooth an die Kochfeldsteuerung 15 überträgt. Dort werden sie abgespeichert und zum temperaturgesteuerten Beheizen des Gargeräts 30 verwendet wie zuvor erläutert. Auch dies ist ein problemloses praktikables Vorgehen, nur erfolgt eben im Vergleich zu davor die Daten-Übertragung mit einem anderen Standard und es wird ein Mobiltelefon 35 oder ein anderes mobiles Endgerät, das die genannten Standards zur Datenübertragung beherrscht, verwendet. Selbstverständlich ist in Abwandlung auch leicht vorstellbar, dass sich das Mobiltelefon 35 ähnlich zu Fig. 1 per WLAN mit einem WLAN-Access Point verbindet, der dann wiederum mit der Cloud verbunden ist.

In der Fig. 2 ist dann noch dargestellt, wie nach dem Einlesen der Charakteristika zum Gargerät 30 dieses Gargerät 30 nach links verschoben werden kann in eine gestrichelt dargestellte Position, vorteilhaft über eine der Heizeinrichtungen 13 aus Fig. 1. Dort wird das Gargerät 30 dann temperaturgesteuert mit einem von einer Bedienperson ausgewählten Automatikkochprogramm beheizt von der Kochfeldsteuerung 15. Für den genauen Ablauf ist es beispielsweise möglich, dass nach dem Aufstellen des Gargeräts 30 auf das Kochfeld 11 bzw. die Kochfeldplatte 12 im Identifikationsbereich 21 sofort eine Identifikation startet oder aber durch eine Bedienperson ausgelöst wird. Sobald die Identifikation aus dem NFC-Tag 32 gelesen worden ist, kann ein akustischer und/oder optischer Hinweis an die Bedienperson gegeben werden, dass nun das Gargerät 30 über eine Heizeinrichtung bewegt werden kann und dort beheizt werden kann oder ein Automatikkochprogramm starten kann. Gleichzeitig kann die ausgelesene Identifikation an die Cloud 28 übertragen werden, um die gewünschten Charakteristika anzufordern. Bis tatsächlich ein Temperaturregelvorgang für das Gargerät 30 notwendig ist, werden die entsprechenden Daten in der Kochfeldsteuerung sein und verwendet werden können.

Vorteilhaft wird die Identifikation samt den zugehörigen Charakteristika abgespeichert in der Kochfeldsteuerung 15 bzw. einem entsprechenden Speicher. Dies weist den Vorteil auf, dass so für zukünftige Kochvorgänge mit diesem Gargerät 30 kein erneutes Herunterladen der Charakteristika aus der Cloud notwendig ist. Es wird lediglich die Identifikation mittels des NFC-Lesers 22 am Gargerät 30 abgefragt. Wenn die Kochfeldsteuerung 15 dann erkennt, dass sie diese Charakteristika bereits abgespeichert hat, was ja bei einer mehrfachen Verwendung des Gargeräts in der Praxis zu erwarten ist, müssen die gewünschten Charakteristika nicht extra heruntergeladen werden. Hierfür kann vorgesehen sein, dass die Identifikation des Gargeräts 30 nicht nur den Typ enthält, sondern sogar dessen einzigartige individuelle Kennung. So kann wirklich jedes einzelne Gargerät abgespeichert sein.

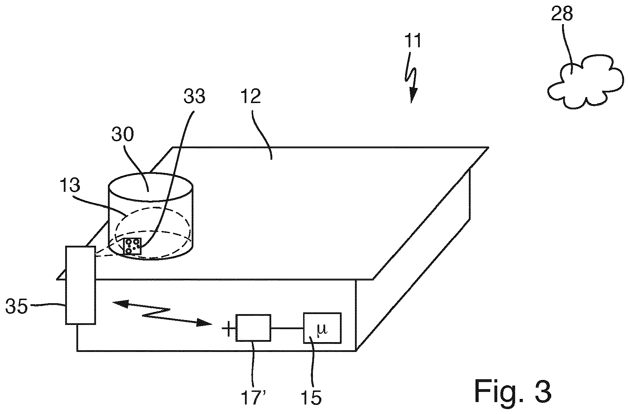

In der Fig. 3 ist eine nochmals weitere Ausgestaltung der Erfindung dargestellt mit einem Kochfeld 11 ähnlich wie zuvor beschrieben, nämlich mit Kochfeldplatte 12 und Heizeinrichtungen 13. Eine Kochfeldsteuerung 15 ist vorgesehen, die eine Gegen-Kommunikationseinrichtung 17 aufweist, hier beispielsweise wieder als Bluetooth-Modul. Allerdings weist das Kochfeld 11 auf der Kochfeldplatte 12 keinerlei Identifikationsbereich auf. Das Gargerät 30 weist als Identifikationsmittel einen QR-Code 33 auf, alternativ einen Barcode. Um diesen zu erkennen, wird ein Mobiltelefon 35 mit seiner Kamera so ausgerichtet, dass es den QR-Code 33 auslesen kann und die Information oder Identifikation gewinnen kann. Als weitere Alternative zur Identifikation könnte ein alphanumerischer Code aufgedruckt sein oder eingeprägt sein, der eine individuelle Kennung und somit Identifikation zum Gargerät 30 aufweist. Auch dieser Code kann leicht mit einem Mobiltelefon 35 per Kameraaufnahme erkannt werden. Diese Identifikation wird dann vom Mobiltelefon 35 wie zuvor zur Fig. 2 beschrieben direkt oder indirekt mit dem Internet bzw. der Cloud 28 ausgetauscht, um von dort die Charakteristika zu diesem Gargerät 30 zu erhalten. Über die Bluetooth-Verbindung werden sie dann an die Kochfeldsteuerung 15 gegeben. Hier kann vorteilhaft vorgesehen sein, dass die Identifikation des Gargeräts 33, die vom Mobiltelefon 35 aus dem QR-Code 33 ausgelesen wird, gleichzeitig oder sogar zuerst per Bluetooth an die Kochfeldsteuerung 15 übertragen wird. Somit weiß die Kochfeldsteuerung 15, welches Gargerät 30 genau aufgestellt ist. Sind dessen Charakteristika beispielsweise schon eingespeichert, so wird dies dem Mobiltelefon 35 mitgeteilt, welches sie dann nicht mehr von der Cloud 28 abfragen muss. Der Vorgang ist dann abgeschlossen und es kann ein temperaturgesteuertes Beheizen des Gargeräts 30 erfolgen. Alternativ werden die Charakteristika dieses Gargeräts 30 anhand seiner individuellen Identifikation aus der Cloud 28 abgefragt und per Bluetooth in die Kochfeldsteuerung 15 eingespeichert für den folgenden Vorgang und auch zukünftige Vorgänge.

Ein Aufstellen des Gargeräts 30 im Identifikationsbereich 21 sowie ein Entfernen können entweder über zusätzliche Topferkennungsmittel erkannt werden, wie sie bekannt sind. Alternativ kann dies mittels des NFC-Lesers 22 erfolgen, der dann ja feststellt, dass das Gargerät 30 bzw. dessen NFC-Tag 32 nicht mehr erkannt werden kann, also entfernt worden sein muss. Wenn es dann woanders steht, kann aufgrund des zeitlichen Zusammenhangs gesagt werden, dass genau dieses Gargerät 30 auf einen neuen Aufstellort bewegt worden ist.

Möglichkeiten zum Betrieb eines Gargeräts 30 auf dem Kochfeld 11 bzw. einer Heizeinrichtung 13 sind zuvor genannt worden. Beispielsweise kann eine von einer Bedienperson vorgebbare Wassertemperatur oder sonstige Temperatur eines Garguts in dem Gargerät 30 erreicht und gehalten werden. Ebenso können eine Gardauer oder Kochdauer eingestellt und gehalten werden. Weitere Möglichkeiten sind Aufheizen oder Warmhalten von Nahrungsmitteln im Gargerät 30.

## Patentansprüche

1. Verfahren zum Betrieb eines Kochfelds zum Beheizen eines Gargerätes mit Gargut darin,
wobei das Kochfeld aufweist:
- eine Kochfeldplatte und mindestens eine Heizeinrichtung unter der Kochfeldplatte,
- eine Kochfeldsteuerung, eine Leistungsversorgung für die mindestens eine Heizeinrichtung und eine Kommunikationseinrichtung, die zur Kommunikation mit einer außerhalb des Kochfelds angeordneten Gegen-Kommunikationseinrichtung ausgebildet ist,
wobei das Gargerät einen Gargerätboden und berührungslos lesbare Identifikationsmittel aufweist, die eine Identifikation des Gargeräts enthalten,
**dadurch gekennzeichnet, dass** folgende Schritte durchgeführt werden:
- die Identifikation des Gargeräts wird mittels der Identifikationsmittel ausgelesen und diese Identifikation wird an die Kochfeldsteuerung gegeben,
- die Kochfeldsteuerung verbindet sich über die Kommunikationseinrichtung mit einer außerhalb des Kochfelds angeordneten Gegen-Kommunikationseinrichtung, die mit einer Informationssammlung verbunden ist, insbesondere als Verbindung über das Internet mit einer Datenbank oder einer Cloud,
- in der Informationssammlung sind Charakteristika des Gargeräts abgespeichert, die mindestens eine Information aus der folgenden Gruppe enthalten: Regelcharakteristika, Steuercharakteristika, Bediencharakteristika, Anzeigecharakteristika,
- die Information bzgl. des Gargeräts wird in die Kochfeldsteuerung geladen und insbesondere in einem Speicher der Kochfeldsteuerung abgespeichert,
- das Gargerät ist oder wird auf die Kochfeldplatte über mindestens einer Heizeinrichtung aufgestellt,
- die Kochfeldsteuerung berechnet oder erhält die Information, über welcher Heizeinrichtung das Gargerät aufgestellt ist und betreibt die Heizeinrichtung zum Beheizen des Gargeräts unter Verwendung der heruntergeladenen und ggf. abgespeicherten Information bezüglich des Gargeräts,
- eine Temperatur des Gargerätbodens wird vom Kochfeld erfasst anhand der Informationen bzgl. des Gargeräts, und es erfolgt eine temperaturgeregelte Beheizung mittels der Heizeinrichtung anhand dieser Informationen, wobei eine Temperaturmessung des Gargerätbodens über eine induktive Kopplung mit einer Eigenresonanzmessung des Gargerätbodens bzw. eines Schwingkreises, der den Gargerätboden und eine Induktionsspule umfasst, vorgenommen wird.

2. Verfahren nach Anspruch 1, **dadurch gekennzeichnet, dass** das Kochfeld eine Kochfeldanzeige aufweist und an der Kochfeldanzeige eine Leistung der Heizeinrichtung und/oder die Temperatur des Gasgeräts bzw. des Gargerätbodens angezeigt werden, wobei vorzugsweise an der Kochfeldanzeige auch allgemeine Informationen zum Gargerät angezeigt werden, insbesondere die Art des Gargeräts und/oder eine Bezeichnung des Gargeräts.

3. Verfahren nach Anspruch 1 oder 2, **dadurch gekennzeichnet, dass** das Kochfeld eine Bedieneinrichtung aufweist und die Bedieneinrichtung in ihrem Erscheinungsbild und/oder hinsichtlich ihrer Bedienmöglichkeiten anhand der Informationen bezüglich des Gargeräts an die Art des Gargeräts oder an das spezielle Gargerät angepasst wird.

4. Verfahren nach einem der vorhergehenden Ansprüche, **dadurch gekennzeichnet, dass** für das Beheizen des Gargeräts für verschiedene Zieltemperaturen vorgebbar sind, insbesondere an einer Bedieneinrichtung nach Anspruch 3 eingegeben werden und/oder an einer Kochfeldanzeige nach Anspruch 2 angezeigt werden, und die Kochfeldsteuerung eine Temperaturregelung des Gargeräts bzw. des Gargerätbodens auf diese Temperatur mittels der Heizeinrichtung vornimmt.

5. Verfahren nach einem der vorhergehenden Ansprüche, **dadurch gekennzeichnet, dass** die heruntergeladenen Informationen bezüglich des Gargeräts genutzt werden zur Anpassung einer Regelung von der Beheizung bzw. Temperatureinstellung des Gargeräts.

6. Verfahren nach Anspruch 5, **dadurch gekennzeichnet, dass** die Heizeinrichtung eine Induktionsheizspule ist, die die Induktionsspule in dem Schwingkreis für die induktive Kopplung mit Eigenresonanzmessung bildet.

7. Verfahren nach einem der vorhergehenden Ansprüche, **dadurch gekennzeichnet, dass** das Kochfeld eine Topferkennungseinrichtung aufweist und damit erkannt wird, ob und wo ein Gargerät auf die Kochfeldplatte aufgestellt ist.

8. Verfahren nach einem der vorhergehenden Ansprüche, **dadurch gekennzeichnet, dass** die Identifikationsmittel des Gargeräts von einer Identifikationseinrichtung im Kochfeld selbst ausgelesen werden, wobei vorzugsweise die Identifikationsmittel ein RFID-Tag oder ein NFC-Tag sind und von der Identifikationseinrichtung ausgelesen werden.

9. Verfahren nach Anspruch 8, **dadurch gekennzeichnet, dass** am Kochfeld ein bestimmter Identifikationsbereich vorgesehen ist und nach Erkennen der Platzierung eines Gargeräts mit Identifikationsmittel in diesem Identifikationsbereich die Identifikationseinrichtung die Identifikationsmittel erkennt und ausliest.

10. Verfahren nach einem der Ansprüche 1 bis 7, **dadurch gekennzeichnet, dass** die Identifikationsmittel des Gargeräts auslesbar sind mittels eines mobilen Endgeräts, wobei sie von einem mobilen Endgerät ausgelesen werden, wobei vorzugsweise die Identifikationsmittel ein aufgedruckter QR-Code oder ein Barcode sind, wobei insbesondere das mobile Endgerät diese Information drahtlos an die Kommunikationseinrichtung des Kochfelds überträgt.

11. Verfahren nach einem der vorhergehenden Ansprüche, **dadurch gekennzeichnet, dass** sich die Kommunikationseinrichtung des Kochfelds direkt mit dem Internet bzw. mit einer Cloud verbindet zum Herunterladen der Informationen.

12. Verfahren nach einem der Ansprüche 1 bis 10, **dadurch gekennzeichnet, dass** das Kochfeld mit der Kommunikationseinrichtung eine Kommunikationsverbindung mit einem mobilen Endgerät aufbaut und sich das mobile Endgerät mit dem Internet bzw. einer Cloud verbindet zum Herunterladen der Informationen zuerst auf das mobile Endgerät und dann von diesem über die Kommunikationseinrichtung in die Kochfeldsteuerung.

13. Verfahren nach einem der vorhergehenden Ansprüche, **dadurch gekennzeichnet, dass** zumindest ein Teil der Information über das Gargerät in dem Identifikationsmittel enthalten ist.

14. Kochfeld zur Durchführung des Verfahrens nach einem der vorhergehenden Ansprüche.

15. Kochfeldsystem bestehend aus einem Kochfeld nach Anspruch 14 und aus mindestens einem Gargerät, wobei das Gargerät zum Zubereiten von Gargut darin ausgebildet ist und ein individuelles Identifikationsmittel aufweist, insbesondere einen RFID-Tag, einen NFC-Tag, einen QR-Code oder einen Barcode.
